# EUROPÄISCHE PATENTSCHRIFT

(11) **EP 0 975 996 B1**
(45) Veröffentlichungstag und Bekanntmachung des Hinweises auf die Patenterteilung: **12.12.2001**
(21) Anmeldenummer: 98924124.5
(22) Anmeldetag: 16.04.1998
(51) Int. Cl.: G02B 6/16, G02B 6/34, G03F 7/20

(54) **VORRICHTUNG ZUR ERZEUGUNG VON GITTERSTRUKTUREN IN LICHTLEITFASERN**
DEVICE FOR MAKING GRID STRUCTURES IN OPTICAL FIBERS
SYSTEME A FABRIQUER DES STRUCTURES DE GRILLE DANS DES FIBRES OPTIQUES

(30) Priorität: 16.04.1997 DE 19715807
(43) Veröffentlichungstag der Anmeldung: 02.02.2000
(73) Patentinhaber: LISSOTSCHENKO, Vitaly N., 44225 Dortmund (DE); Hentze, Joachim, 33189 Schlangen (DE)
(72) Erfinder: LISSOTSCHENKO, Vitaly N., 44225 Dortmund (DE); Hentze, Joachim, 33189 Schlangen (DE)
(74) Vertreter: Basfeld, Rainer, Dr. Dipl.-Phys.
(86) Internationale Anmeldenummer: EP9802220
(87) Internationale Veröffentlichungsnummer: WO9847029

(56) Entgegenhaltungen:
- EP-A- 0 687 992
- GB-A- 2 210 470
- US-A- 5 367 588
- US-A- 5 550 948
- TIMP G ET AL: "USING LIGHT AS A LENS FOR SUBMICRON, NEUTRAL-ATOM LITHOGRAPHY" PHYSICAL REVIEW LETTERS, Bd. 69, Nr. 11, 14. September 1992, Seiten 1636-1639, XP000320466

## Beschreibung

Die Erfindung betrifft eine Vorrichtung zur Erzeugung von Gitterstrukturen in Lichtleitfasern durch lokale Laserbestrahlung, mit einem Laseremitter, der auf die Mantelfläche der Lichtleitfaser gerichtet ist, wobei zwischen dem Laseremitter und der Lichtleitfaser Strahltransformationseinrichtungen angeordnet sind.

Zu Dispersionskorrektur in Lichtleitfasern sowie zum Ausgleich einer gegebenen Amplituden-Frequenz-Kennlinie der jeweils verwendeten Lichtquelle werden an der Grenzschicht zwischen Kern und Mantel oder im äußeren Mantelbereich quer zur Faserlängsrichtung im Material optische Gitter erzeugt. Die Gitterkonstanten liegen dabei in der Größenordnung von ca. 0,5*µ* für eine schmalbandige Verstärkung zur Durchführung von Wellenlängen-Multiplexing, beispielsweise in Erbium-Verstärkern, oder in der Größenordnung von einigen hundert *µ*, um unterschiedliche Amplituden-FrequenzCharakteristiken der eingesetzten Emitter auszugleichen. Mitunter werden in optischen Filterstrukturen für die vorgenannten Anwendungen Gitter mit unterschiedlichen Gitterkonstanten miteinander kombiniert. Im Normalfall sind die Gitter äquidistant; für besondere Anwendungsfälle gelangen jedoch auch nicht-äquidistante Gitter zum Einsatz.

Zur Erzeugung der Gitterstrukturen wird die Lichtleitfaser von außen durch den Mantel mit einem linienförmigen Laserstrahl ausreichender Intensität belichtet. Durch Energieabsorption im Bereich der Grenzflächen tritt dabei eine lokale Strukturänderung des Materials auf, die an diesen Stellen zu einer bleibenden Änderung des Brechungsindexes führt. Zur Erzeugung eines Diffraktionsgitters werden solche Strukturen im Abstand der gewünschten Gitterkonstante generiert.

Die Herstellung einer kompletten Gitterstruktur durch sequentielle Belichtung mittels eines einzigen fokussierten Laserstrahls ist ausgesprochen zeitaufwendig und demzufolge unwirtschaftlich. Außerdem können Ungenauigkeiten durch die vielfache Relativbewegung von Faser und optischem System zueinander auftreten. Es sind deswegen verschiedene Methoden bekannt, die eine gleichzeitige Belichtung der Faser entsprechend der gewünschten Gitterstruktur erlauben. Eine bekannte Möglichkeit, siehe die US 5,367,588, besteht beispielsweise darin, das Beugungsmuster eines Diffraktionsgitters zur Belichtung heranzuziehen. Dabei ist die Intensität der einzelnen Beugungsmaxima jedoch zum einen relativ gering, zum anderen ist der Gesamtwirkungsgrad dadurch relativ niedrig, daß nur Maxima niedriger Ordnung ausgenutzt werden können. Eine weitere bekannte Möglichkeit, siehe die US 5,550,948, sieht die Belichtung durch eine Schlitzmaske vor. Die Nachteile dieser Methode liegen darin, daß der Wirkungsgrad aufgrund des größtenteils von der Maske absorbierten einfallenden Lichts sehr niedrig ist und die Masken aufwendig und entsprechend teuer in der Herstellung sind. Hinzu kommt, daß die Breite der erzeugbaren Strukturen durch Beugungseffekte an den Maskenöffnungen begrenzt ist. Nicht zuletzt ist diese Methode relativ unflexibel, da die Maske selbst nach dem Belichtungsvorgang in der Regel weitgehend unbrauchbar ist.

Ausgehend von dieser Problematik ergibt sich die der Erfindung zugrundeliegende Aufgabenstellung, eine Belichtungsvorrichtung für Lichtleitfasern zur Verfügung zu stellen, die eine verbesserte Lichtausnutzung erlaubt, d. h. einen besseren Wirkungsgrad hat, und in der Anwendung flexibler ist als die bisher bekannten Systeme.

Zur Lösung dieser Aufgabenstellung schlägt die Erfindung die im Anspruch 1 definierte Vorrichtung zur Erzeugung von Gitterstrukturen in Lichtleitfasern vor, bei der die Strahltransformationseinrichtung mindestens ein quer zur Lichleitfaser ausgerichtetes fächerförmiges Zylinderlinsenarray aufweist, in dessen Fokusebene sich die Lichtleitfaser befindet und welches relativ zur Lichtleitfaser verschiebbar ist.

Erfindungsgemäß wird ein Zylinderlinsenarray mit einem kollimierten, in Längsrichtung der zu belichtenden Faser in etwa linienförmigem Laserstrahl, der die gesamte Breite des Arrays ausleuchtet, beleuchtet. Durch jede einzelne Zylinderlinse wird der Laserstrahl in der Faser, d. h. an der Grenzfläche zwischen Kern und Mantel, oder im Mantel, fokussiert, so daß an diesen Stellen die zur Strukturumwandlung erforderliche Energiedichte vorliegt, Die Gitterperiode ergibt sich dabei durch den Relativabstand der Zylinderlinsen, die quer zur Lichtleitfaser ausgerichtet sind.

Ein Vorteil der Erfindung ergibt sich bereits durch die Verwendung eines Zylinderlinsenarrays an sich. Dadurch wird nämlich praktisch das gesamte einfallende Laserlicht zur Belichtung ausgenutzt. Der Wirkungsgrad ist somit entsprechend hoch und liegt nahezu bei 1. Demzufolge lassen sich die Gitterstrukturen schnell und wirtschaftlich fertigen.

Die besondere Flexibilität der erfindungsgemäßen Vorrichtung ist eine Folge der fächerförmigen Anordnung der Zylinderlinsen im Array. Diese Anordnung kommt dadurch zustande, daß sich die Zylinderlinsen bei gleichbleibender Brennweite in Längsrichtung verbreitern, beispielsweise von einer anfänglichen Breite A bis hin zu A+dx. Dies hat zur Folge, daß sich die Abstände der Brennpunkte bzw. -linien der nebeneinander nichtparallel liegenden Zylinderlinsen im Array ebenfalls voneinander entfernen, beispielsweise von einem anfänglichen Abstand p bis hin zu einem Abstand p+dx am anderen Ende des Arrays.

Daraus ergibt sich der besondere Vorteil der Erfindung, daß - bei einer oben liegenden Beleuchtung - eine unterhalb des Zylinderlinsenarrays angeordnete Lichtleitfaser lediglich durch eine Verschiebung des Arrays in Zylinderlinsenlängsrichtung relativ zur Lichtleitfaser stufenlos mit einer Gitterperiode zwischen p und p+dx belichtet werden kann. Für eine Veränderung der gewünschten Gitterperiode ist also lediglich eine Verstellung des Zylinderlinsenarrays erforderlich.

Neben der dargestellten Möglichkeit, durch Verschiebung des Arrays quer zur Lichtleitfaser die Gitterperiode zu vergrößern, ist es außerdem denkbar, für eine Kombination unterschiedlicher Gitterkonstanten das gesamte Array schrittweise in Längsrichtung der Faser zu bewegen und dabei jeweils eine Belichtung vorzunehmen. Erfolgt beispielsweise mehrfach hintereinander eine Verschiebung um einen Abstand dy, werden mehrere Gitter mit dieser Periode im Abstand p+dx voneinander generiert.

Zweckmäßigerweise ist zur Durchführung der Bewegungen das Zylinderlinsenarray auf Führungen angeordnet. Je nach der gewünschten Bewegungsrichtung kann das Array beispielsweise auf hochpräzisen Linearführungen laufen, die quer und/oder längs der Faser ausgerichtet sind. Auf diese Weise ist eine genaue und reproduzierbare Positionierung gewährleistet.

Vorzugsweise sind die vorgenannten Führungen mit motorischen Stellantrieben versehen. Durch derartige Stellantriebe, beispielsweise Piezo-, Schrittmotor- oder sonstige Antriebe, kann die Verstellung hochgenau und weitgehend automatisiert vorgenommen werden. Der Anschluß der Stellantriebe an rechnergestützte Steueranlagen erlaubt eine rationelle automatisierte Fertigung und damit die programmgesteuerte Generierung unterschiedlicher Gittertypen.

Eine vorteilhafte, wesentliche Erweiterung der Anwendungsmöglichkeiten ergibt sich daraus, daß die einzelnen Zylinderlinsen im Zylinderlinsenarray relativ zueinander bewegbar sind. Dadurch ergibt sich nämlich die zusätzliche Möglichkeit, die Abstände der Zylinderlinsen innerhalb des Zylinderlinsenarrays und damit die erzeugbaren Gitterperiode weitgehend frei zu variieren. Damit sind praktisch beliebige, auch nicht-äquidistante Gitterstrukturen besonders rationell generierbar. Die erreichbare Flexibilität bei der individuellen Anpassung an unterschiedlichste Anwendungen ist somit gegeben.

Zweckmäßigerweise sind die einzelnen Zylinderlinsen in der vorgenannten Ausführungsform ebenfalls auf hochgenauen Führungen angebracht, die vorzugsweise ebenfalls mit motorischen Stellantrieben versehen sind. Diese Ausbaustufe ermöglicht dann praktisch eine weitgehend automatische, rechnergestützte Erzeugung von programmierten Gitterstrukturen.

In einer vorteilhaften Weiterentwicklung der Erfindung sind mehrere erfindungsgemäße Zylinderlinsenarrays auf einem Wechselträger angebracht, die jeweils zwischen Laseremitter und Lichtleitfaser einschwenkbar sind. Aus Gründen der Handhabung bzw. der Fertigung sollte mit einem einzigen Zylinderlinsenarray jeweils ein begrenzter Bereich abgedeckt werden. Durch die Zusammenfassung von Arrays mit aneinander anschließenden Verstellbereichen in einem magazinartigen Wechselträger läßt sich - beispielsweise in automatisierten Fertigungsanlagen - eine entsprechend großer Bereich abdecken. Außerdem wird die Kombination von Gitterstrukturen mit unterschiedlichen Perioden erheblich vereinfacht.

In praktischen Ausführungsformen können die einzelnen Zylinderlinsenarrays beispielsweise zeilen- und spaltenweise neben - bzw. übereinander - auf einem rechteckigen Magazinträger angeordnet sein oder kreissymmetrisch auf einem runden, revolverartigen Träger.

Ausführungsbeispiele sind im folgenden anhand der Zeichnungen näher erläutert. Es zeigen im einzelnen:
- Fig. 1: eine erfindungsgemäße Vorrichtung in schematischer Perspektivansicht;
- Fig. 2: erfindungsgemäße Wechselträger mit Zylinderlinsenarrays.

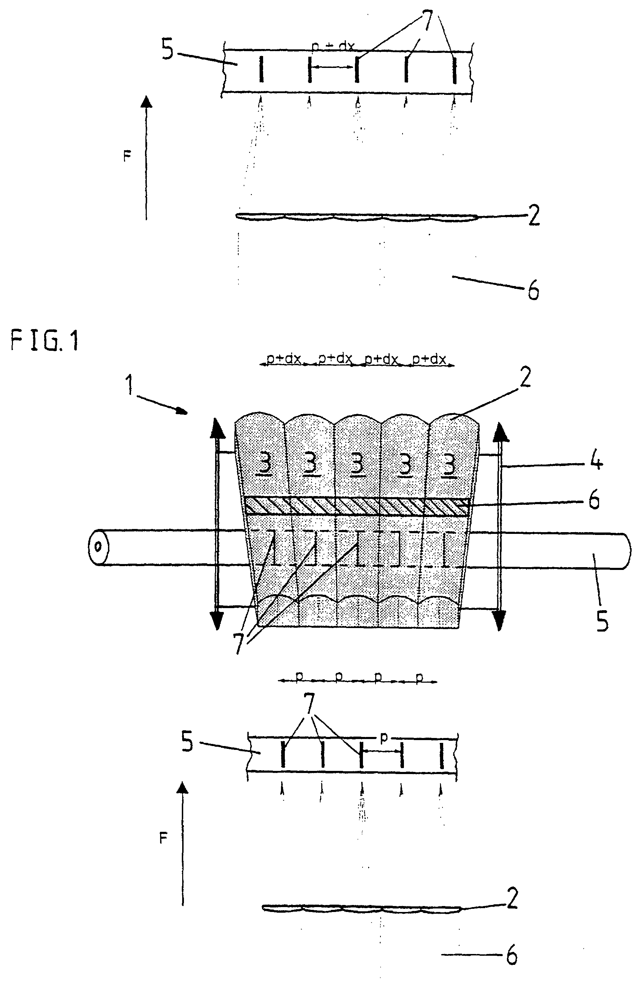

In Fig. 1 ist in einer perspektivischen Ansicht eine erfindungsgemäße Vorrichtung zur Erzeugung von Gitterstrukturen dargestellt und als Ganzes mit dem Bezugszeichen 1 versehen, Diese weist ein fächerförmiges Zylinderlinsenarray 2 auf, welches aus einer Vielzahl von einzelnen Zylinderlinsen 3 gebildet wird.

Das Zylinderlinsenarray 2 ist auf einer hochpräzisen Linearführung 4 angebracht, die mittels nicht dargestellter Stellantriebe in Längsrichtung der Zylinderlinsen 3 und damit quer zu einer in dieser Darstellung unterhalb des Arrays 2 angeordneten Lichtleitfaser 5 verschiebbar ist.

In dieser Darstellung ist mit einem im einzelnen nicht dargestellten Laser von oben, d.h. in der Zeichnungsebene, ein kollimierter, linienförmiger Laserstrahl 6 einstrahlbar, dessen Querschnitt schraffiert angedeutet ist. Die Lichtleitfaser 5 ist dabei so im Fokus des Zylinderlinsenarrays 2 angeordnet, daß bei Beleuchtung mit dem Laserstrahlbündel 6 Gitterstrukturen 7 erzeugt werden.

Am vorderen Ende des Arrays 2, d. h. in der Darstellung unten, weisen die einzelnen Zylinderlinsen 3 einen Abstand p voneinander auf, der sich nach hinten, d. h. in der Darstellung nach oben, zum Abstand p+dx erweitert. Wird nun das Array 2 auf den Führungen 4 quer zur Lichtleitfaser 5 verschoben, lassen sich Gitterstrukturen mit der kleinsten Periode p herstellen, was in der Darstellung unten in der Zeichnung erläutert ist. Wird das Array in die andere Richtung bis zum Anschlag verschoben, ergibt sich eine Gitterperiode von p+dx, was schematisch oben in der Zeichnung dargestellt ist.

Die Verstellung kann gegebenenfalls computergesteuert erfolgen, was eine weitgehende Automatisierung des Vorgangs ermöglicht.

Es ist weiterhin denkbar, das Array 4 auf gleichartigen Führungen anzuordnen, die parallel zur Lichtleitfaser 5 ausgerichtet sind. Auf diese Weise lassen sich die Gitterstrukturen in Faserlängsrichtung schrittweise versetzt mehrfach erzeugen.

Es ist weiterhin denkbar, die einzelnen Zylinderlinsen 3 ebenfalls relativ zueinander verschiebbar auf Führungen anzubringen. Damit lassen sich dann beliebige Abstände p+dx, p+dy usw. völlig unabhängig voneinander einstellen. Auf diese Weise lassen sich dann auch nicht-äquidistante Gitterstrukturen 7 erzeugen.

Bei alledem ergibt sich durch die nahezu vollständige Ausnutzung des Laserlichtbündels 6 durch das Zylinderlinsenarray 2 ein Wirkungsgrad nahe 1. Entsprechend kurz können auch die Belichtungszeiten ausfallen. Durch die Veränderung des Abstands der Gitterstrukturen 3 durch eine bloße Verschiebung des Arrays 2 in den Führungen 4 ist eine besonders schnelle und flexible Anpassung bei der Herstellung unterschiedlicher Gitterstrukturen 7 möglich.

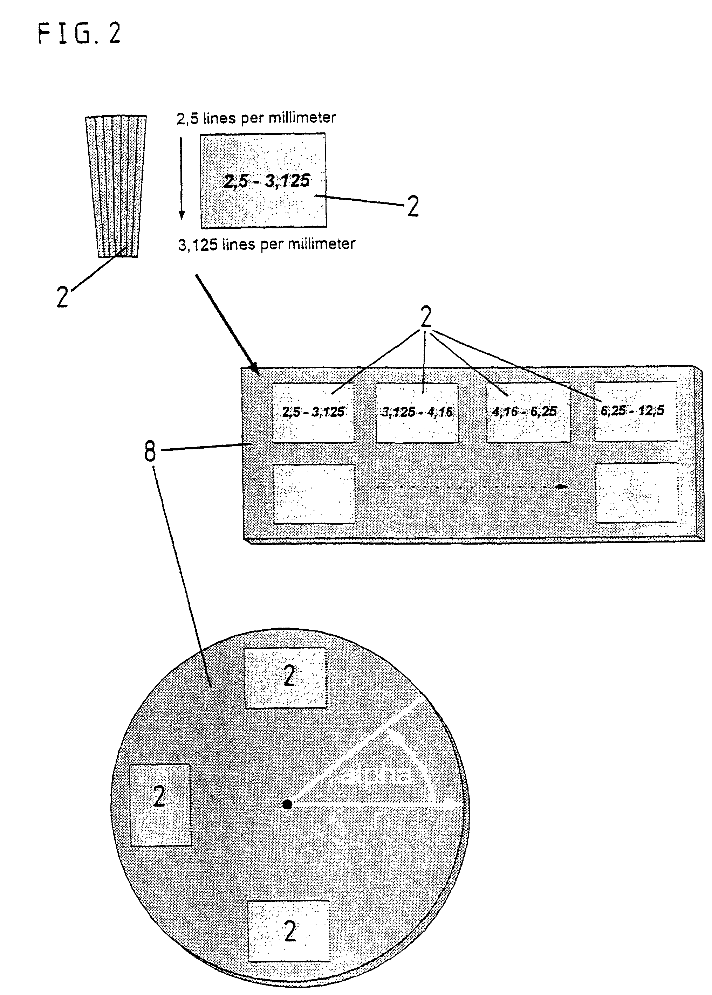

in Fig. 2 ist dargestellt, wie eine Vielzahl von erfindungsgemäßen Zylinderlinsenarrays 2 mit jeweils unterschiedlichen Bereichen der Abstände p bis p+dx auf einem Wechselträger 8 angebracht sind. Dieser Wechselträger 8 kann alternativ rechteckig ausgebildet sein, wobei die Arrays 2 in Reihen und Spalten gruppiert sind, oder auch rund, wobei die Arrays 2 über den Umfang verteilt sind.

An einer erfindungsgemäßen Vorrichtung wird beispielsweise eine Einrichtung angebracht, die es erlaubt, die einzelnen Arrays 2 wie in Fig. 1 dargestellt in den Strahlengang zu bringen. Durch die Gesamtheit der von den einzelnen Arrays 2 abgedeckten Bereiche werden die Anwendungsmöglichkeiten erheblich erweitert.

## Patentansprüche

1. Vorrichtung zur Erzeugung von Gitterstrukturen in Lichtleitfasern durch lokale Laserbestrahlung, mit einem Laseremitter, der auf die Mantelfläche der Lichtleitfaser gerichtet ist, und mit einer Strahltransformationseinrichtung, die zwischen dem Laseremitter und der Lichtleitfaser angeordnet ist,
**dadurch gekennzeichnet, daß** die Strahltransformationseinrichtung mindestens ein quer zur Lichtleitfaser (5) ausgerichtetes, fächerförmiges Zylinderlinsenarray (2) aufweist, in dessen Fokusebene sich die Lichtleitfaser (5) befindet, und welches relativ zur Lichtleitfaser (5) verschiebbar ist.

2. Vorrichtung nach Anspruch 1, **dadurch gekennzeichnet, daß** das Zylinderlinsenarray (2) auf Führungen (4) angebracht ist.

3. Vorrichtung nach Anspruch 1, **dadurch gekennzeichnet, daß** das Zylinderlinsenarray (2) in Zylinderlinsenlängsrichtung verschiebbar ist.

4. Vorrichtung nach Anspruch 1, **dadurch gekennzeichnet, daß** das Zylinderlinsenarray (2) quer zur Zylinderlinsenlängsrichtung verschiebbar ist.

5. Vorrichtung nach Anspruch 1, **dadurch gekennzeichnet, daß** die einzelnen Zylinderlinsen (3) im Zylinderlinsenarray (2) relativ zueinander bewegbar sind.

6. Vorrichtung nach Anspruch 5, **dadurch gekennzeichnet, daß** die Zylinderlinsen (3) auf Führungen (4) angebracht sind.

7. Vorrichtung nach Ansprüchen 2 oder 6, **dadurch gekennzeichnet, daß** die Führungen (4) mit motorischen Stellantrieben versehen sind.

8. Vorrichtung nach Anspruch 1, **dadurch gekennzeichnet, daß** mehrere Zylinderlinsenarrays (2) auf einem Wechselträger (8) angebracht sind, die jeweils zwischen Laseremitter und Lichtleitfaser (5) einschwenkbar sind.

## Claims

1. Device for making grid structures in optical fibres by local laser radiation, comprising a laser emitter directed to the surrounding surface of the optical fibre and a beam transformation device which is arranged between the laser emitter and the optical fibre,
**characterised in that** the beam transformation device comprises at least one fan-shaped cylindrical lens array (2) positioned transversely relative to the optical fibre (5), the optical fibre (5) being arranged in the focal plane of said cylindrical lens array which is displaceable relative to the optical fibre (5).

2. Device as claimed in claim 1, **characterised in that** the cylindrical lens array (2) is arranged on guide mechanisms (4).

3. Device as claimed in claim 1, **characterised in that** the cylindrical lens array (2) is displaceable in the longitudinal direction of the cylindrical lens.

4. Device as claimed in claim 1, **characterised in that** the cylindrical lens array (2) is displaceable transversely to the longitudinal direction of the cylindrical lens.

5. Device as claimed in claim 1, **characterised in that** the individual cylindrical lenses (3) in the cylindrical lens array (2) are moveable relative to one another.

6. Device as claimed in claim 5, **characterised in that** the cylindrical lenses (3) are arranged on guide mechanisms (4).

7. Device as claimed in claim 2 or 6, **characterised in that** the guide mechanisms (4) are provided with motor driven actuators .

8. Device as claimed in claim 1, **characterised in that** several cylindrical lens arrays (2) are arranged on a variable carrier (8), which can individually be pivoted between the laser emitter and the optical fibre (5).

## Revendications

1. Système pour fabriquer des structures de grille dans des fibres optiques par irradiation locale du laser, avec un émetteur de laser, qui est installé sur la surface du revêtement de la fibre de guide de lumière et avec un dispositif de transformation du rayon, lequel est disposé entre l'émetteur de laser et la fibre de guide de lumière **caractérisé en ce que,** le dispositif de transformation du rayon est orienté au moins de façon transversale à la fibre de guide de lumière (5), sous forme de casiers de réseau de lentilles cylindriques (2) présente sur le plan de focalisation la fibre de guide de lumière (5), et lequel est déplaçable par rapport à la fibre de guide de lumière (5).

2. Dispositif selon la revendication 1, **caractérisé en ce que,** le réseau de lentilles cylindrique (2) est appliqué sur des guides (4).

3. Dispositif selon la revendication 1, **caractérisé en ce que,** le réseau de lentilles cylindrique (2) est déplaçable suivant la direction longitudinale des lentilles cylindriques.

4. Dispositif selon la revendication 1, **caractérisé en ce que,** le réseau de lentilles cylindrique (2) est déplaçable de forme transversale à la direction longitudinale des lentilles cylindriques.

5. Dispositif selon la revendication 1, **caractérisé en ce que,** les différentes lentilles cylindriques (13) dans le réseau de lentilles cylindriques (2) sont relativement mobiles l'une vers l'autre.

6. Dispositif selon la revendication 5, **caractérisé en ce que,** les lentilles cylindriques (3) sont appliquées sur des guides (4).

7. Dispositif selon des revendications 2 ou 6, **caractérisé en ce que,** les guides (4) sont composées par des mécanismes de commande moteurs.

8. Dispositif selon la revendication 1, **caractérisé en ce que,** plusieurs réseaux de lentilles cylindriques (2) sont appliqués sur un support interchangeable (8), lesquels peuvent tourner à chaque fois entre l'émetteur du laser et la fibre de guide de lumière (5).
